# EUROPEAN PATENT SPECIFICATION

(11) **EP 3 292 022 B1**
(45) Date of publication and mention of the grant of the patent: **13.03.2019**
(21) Application number: 16741366.5
(22) Date of filing: 06.05.2016
(51) Int. Cl.: B60Q 7/00

(54) **FOLDABLE WARNING TRIANGLE ASSEMBLY**
FALTBARE WARNDREIECKANORDNUNG
ENSEMBLE TRIANGLE DE SIGNALISATION PLIABLE

(30) Priority: 07.05.2015 GB 201507822; 09.07.2015 GB 201512045
(43) Date of publication of application: 14.03.2018
(73) Proprietor: Road Safety Designs Limited, Penarth, South Wales CF64 2SU (GB)
(72) Inventor: WORNHAM, Stephen, Penarth South Wales CF64 2SU (GB)
(74) Representative: Loveless, Ian Mark
(86) International application number: PCT/GB2016/051306
(87) International publication number: WO 2016/178030

(56) References cited:
- EP-A1- 2 147 825
- CN-Y- 2 437 004
- DE-U1- 20 021 366
- DE-U1- 20 304 840
- ES-U- 1 065 441
- ES-U- 1 069 783
- GB-A- 985 881
- IL-A- 94 635
- KR-A- 20120 012 586
- TW-U- M 499 627
- US-A- 3 975 849
- US-A- 5 551 370
- US-A1- 2008 218 329

## Description

### BACKGROUND OF THE INVENTION

This invention relates to the field of road signs and signals, and particularly to the field of warning triangles.

Warning triangles are used to indicate a hazard in the road that may not be readily apparent to approaching motorists. They are used in many countries, and normally take the form of an equilateral triangle. The appearance of warning triangles varies from country to country but they are generally designed to have bright colours that are highly contrasting with the surrounding environment. This helps approaching drivers notice the warning triangle and thus avoid the hazard.

These warning triangles are routinely used by a variety of different organisations and governmental bodies such as police forces, highway agencies and breakdown services. It is also a legal requirement in many countries for motorists to carry these transportable warning triangles in their vehicle for use in the event that the vehicle breaks down at the side of the road.

Therefore, it is important for such a warning triangle to be lightweight and easy to transport, whilst remaining solid and stable when placed at the roadside. They should also be visible to approaching motorists at night and during adverse weather conditions.

The majority of warning triangles currently in use are made from materials that are heavy and rigid, which results in devices that are difficult to store and transport.

A further problem with existing warning triangles is that they generally provide no indication of the direction that an approaching motorist should take to avoid a hazard. This is an important consideration as, if motorists are travelling at night or in poor lighting, it may be difficult for them to discern the location of the hazard and therefore to determine which direction to take.

For example, if there had been a collision between two cars in the central lane of a motorway, there might be substantially less (or no) debris in the left lane compared to the right lane. Current warning triangles would warn approaching motorists of the crash but would not indicate that they should pass the hazard on the left hand side. Such a warning is particularly important at night or in poor lighting, as the approaching motorists may be unable to see the debris themselves.

Triangles that are currently available also tend to be supported on thin legs that do not provide adequate stability. Accordingly, in adverse weather conditions, such as in high winds, or when large vehicles pass near to the triangle at high speeds, these warning triangles can become unstable.

Such warning triangles typically rely on the reflective properties of the materials they are made from to be visible at night or in poor lighting. Such warning triangles are dependent on an external light source, such as the vehicle's headlights, illuminating the triangle in order to be visible at night or in poor lighting. These reflective properties are often not sufficient to catch an approaching motorist's eye when driving in such adverse conditions. Further, the light source generally has to be directed at the warning triangle head-on for the motorist to notice the reflective properties of the material. Thus, these warning triangles can fail to adequately warn motorists of an approaching hazard.

Various attempts have been made to overcome these problems. For example, in patent application DE 102004039390 a warning triangle is provided which comprises light emitting diodes to illuminate the triangle, and a separate relatively large illuminated display under the triangle.

However, this design is cumbersome and impractical for transportation in many situations. Its base is also inadequate to support the triangle by itself.

Further, German utility model DE 202004016041 discloses a warning arrow, attachable to the top of a conventional warning triangle, that acts as an indication device in relation to a hazard.

This device is not directed to warning triangles as a whole and therefore does not overcome the transportation and stability issues present in current warning triangles. Additionally, the device does not fully resolve the aforementioned visibility problem.

The Taiwanese patent document TWM499627 discloses a reflective warning triangle arranged such that it can fold without disconnecting the arms. The Isralian patent document IL94635 and two Spanish patent documents ES 1069783 and ES 1065441 all disclose an emergency warning triangle with flashing light capability. In all these arrangements the warning triangle can be collapsed by disconnecting the arms.

### SUMMARY OF THE INVENTION

We have appreciated the need to improve upon the existing warning triangles currently available.

The warning triangle of the present application is defined in the claims, to which reference is now directed.

The invention provides a foldable warning triangle assembly according to claim 1.

An assembly embodying the invention in one of its preferred embodiments comprises a housing having an interior, wherein the three arms, when folded, can fit within the housing and where the housing also has a connector connectable to one arm at the base of the triangle. The housing doubles as a container and a base for the warning triangle. This allows the warning triangle, once disassembled, to be conveniently stored within the housing for transportation, and once assembled, to remain stable even in conditions such as high winds or when being passed by large vehicles travelling at a high speed.

### BRIEF DESCRIPTION OF THE DRAWINGS

The invention will be described in more detail by way of example with reference to the accompanying drawings, in which:
- **Fig. 1**: is a front view of a warning triangle assembly according to an example, which does not make part of the claimed invention, showing the three arms of the assembly forming a triangle with the direction indicator attached;
- **Fig. 2**: is a front view of the direction indicator according to an example, which does not make part of the claimed invention;

- **Fig. 3**: is a rear view of a warning triangle assembly according to an example, which does not make part of the claimed invention, showing the three arms of the triangle not connected to the direction indicator;
- **Fig. 4**: shows a view of the warning triangle assembly according to an example, which does not make part of the claimed invention, showing the direction indicator rotated by 180 degrees;
- **Fig. 5**: shows an illustration of the warning triangle assembly according to an example, which does not make part of the claimed invention, showing the plurality of lights on the arms according to the claimed invention, and the direction indicator, and the electrical connections, not according to the claimed invention;
- **Fig. 6**: is a side view of the housing of the warning triangle assembly according to the embodiment of the invention;
- **Fig. 7**: is a rear view of a warning triangle assembly according to the embodiment of the invention showing the three arms of the assembly forming a triangle with the direction indicator, which is not according to the claimed invention, and the housing attached;
- **Fig. 8**: is an illustration of an alternative arrangement of the warning triangle assembly showing an alternative connector arrangement for two of the arms and alternative positions for the electrical connections, according to an example, which does not make part of the claimed invention;
- **Fig. 9**: is an illustration of the warning triangle assembly (without direction indicator) according to an embodiment of the invention showing a connector arrangement for the arms;
- **Fig. 10**: is an illustration showing the folding of the warning triangle assembly (without direction indicator) according to the embodiment of the invention;
- **Fig. 11**: is an illustration showing the folding of the warning triangle assembly (without direction indicator) according to the embodiment of the invention:
- **Fig. 12**: is an illustration showing the warning triangle assembly (without direction indicator) according to the embodiment of the invention fully folded;
- **Fig. 13**: shows an illustration of an alternative arrangement of the housing acting as the base for a warning triangle according to the embodiment.
- **Fig. 14**: shows an illustration of an alternative arrangement of the warning triangle assembly with the direction indicator, which is not according to the claimed invention, arranged diagonally within the triangle.

### DESCRIPTION OF A PREFERRED EMBODIMENT OF THE INVENTION

A device embodying the invention will now be described with reference to the figures.

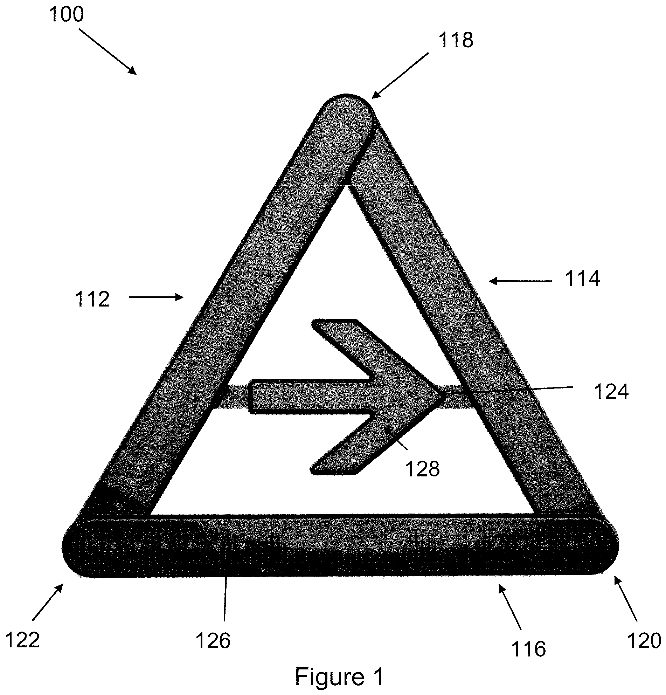

Referring initially to figure 1, a warning triangle assembly 100 of a first example, which does not make part of the claimed invention, that comprises three arms 112, 114 and 116. These arms 112, 114 and 116 are made from a rigid plastic material and have a substantially greater length than they have width. The arms 112, 114 and 116 may be connected to each other at connection points 118, 120 and 122 positioned at the each end of each arm 112, 114 and 116. At these connection points 118, 120 and 122, each arm 112, 114 and 116 has a connector (not shown) that securely attaches the ends of each arm 112, 114 and 116 together to form a triangle. The two connectors at each connection point 118, 120 and 122, comprise a peg and hole combination, whereby inserting the peg of one arm into the corresponding hole of the other securely attaches the two arms together. Arm 112 has one connector on its front surface 126, and one connector on its back surface, arm 114 has both connectors on its front surface 126, and arm 116 has both connectors on its back surface, located on the back of arm 116.

Arms 112, 114 and 116 of warning triangle assembly 100 are a size that is appropriate for transportation, such that they can easily fit in the boot of a car or other vehicle.

The material of the front surface 126 of arms 112, 114 and 116 is made from a substantially transparent material that covers a surface that is designed to be visually eye-catching. The visually eye-catching surface may comprise a plurality of lights, reflectors or both. The visually eye-catching surface may be made from a material of a bright colour, or the front surface 126 may be made from a material of a bright colour or they both may be made from a material of a bright colour.

The connectors are arranged to allow the easy separation of the three arms 112, 114 and 116 after they have been connected together. Alternatively, the arms may only be separable at one connection point and permanently pivotably connected at the other two connection points. Further, the connection points allow two of the arms, for example 112 and 114, to be disconnected from each other at connection point 118 and pivot about connection points 120 and 122. This allows the two arms 112 and 114 to be pivoted such that they can lie flat alongside one another. This enables warning triangle assembly 100 to be easily stored and transported.

The warning triangle assembly 100 further comprises a direction indicator 124. Direction indicator 124 is made from the same rigid plastic material as arms 112, 114, and 116 and may be constructed in a variety of shapes. Preferably, direction indicator 124 is constructed so that it is the shape of an arrow, but may be rectangular, square or other appropriate shape. Further, the arrow 124 has an front surface 128, that covers a surface that is designed to be visually eye-catching. Front surface 128 may be made from the same material as the front surface 126 of arms 112, 114 and 116. Further, the visually eye-catching surface of arrow 124 may be made of the same material as the visually eye-catching surface of arms 112, 114 and 116, and may also comprise a plurality of lights, reflectors or both . Alternatively, front surface 128 of arrow 124 and the visually eye-catching surface of arrow 124 may be made from a different material and may be a different colour than the front surface 126 and the visually eye-catching surface of arms 112, 114 and 116.

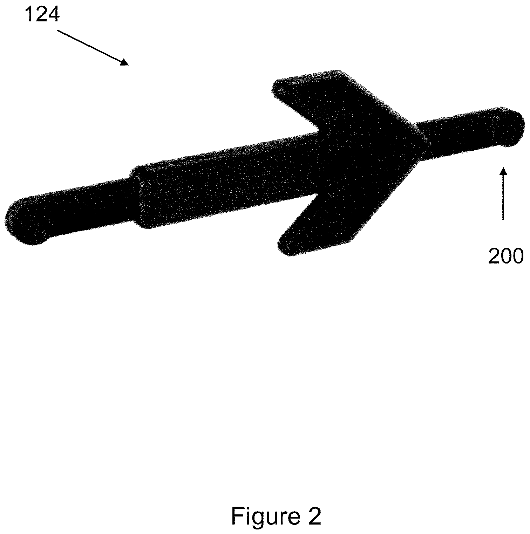

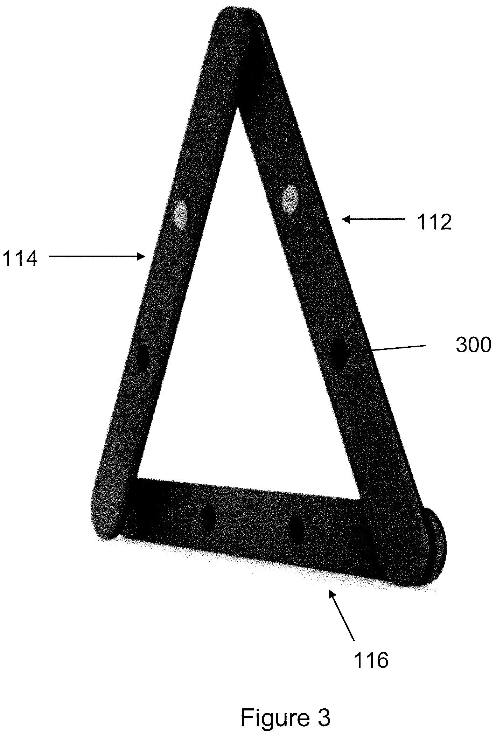

With reference now to figures 2 and 3, arrow 124 has connectors 200 positioned on either end of arrow 124. These connectors 200 are in the form of pegs. Corresponding connectors 300 are positioned at the back of arms 112 and 114 and are in the form of holes. Arrow 124 is connectable to the triangle by inserting pegs 200, into holes 300. Once the arrow 124 is connected to arms 112 and 114, the structural integrity and the stability of assembly 100 is increased.

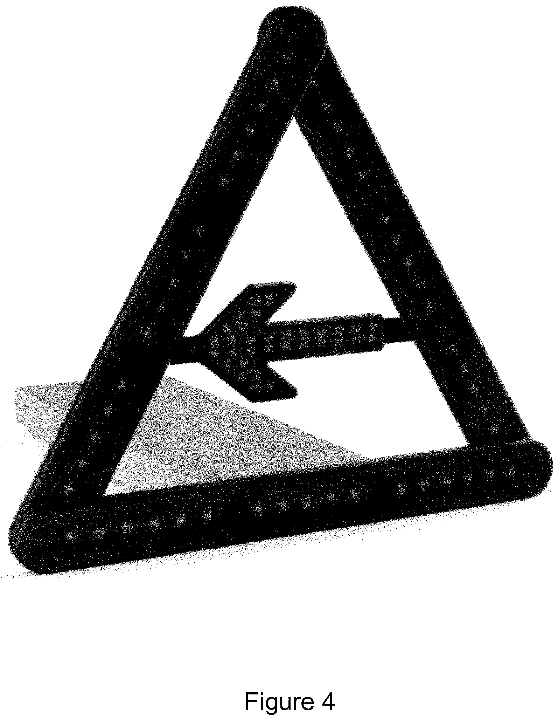

Arrow 124 can also be easily removed and rotated by 180 degrees to form an assembly, as show in figure 4, that is identical to assembly 100 save for that fact that this assembly indicates to motorists the opposite direction of travel.

Once assembly 100 has been used, arrow 124 is removed in order for arms 112 and 114 to folded flat ready for transportation.

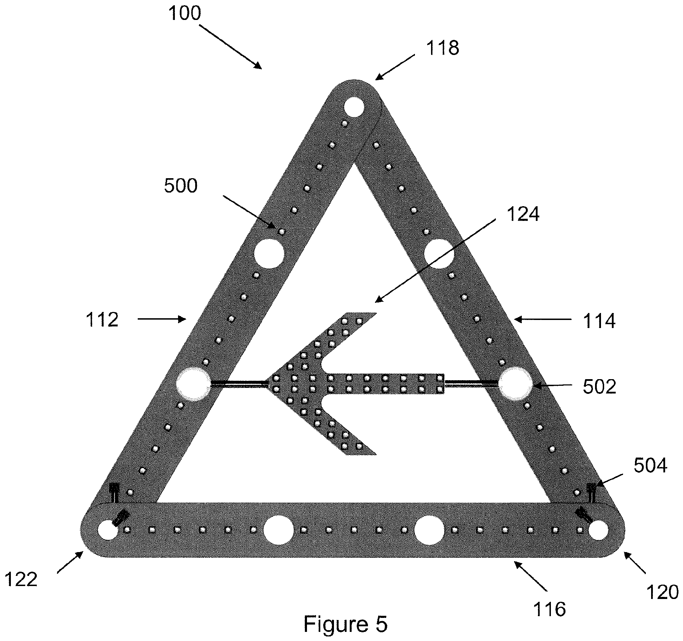

With reference now to figure 5, warning triangle assembly 100 further comprises a plurality of lights 500 on each arm 112, 114 and 116, and on arrow 124. (We note that the assembly of figure 5 has its arrow pointing in the opposite direction to the assembly of figure 1. However, due to the fact that all other features of the two assemblies are identical, we have kept the same reference numeral for clarity.) Lights 500 may comprise LED bulbs and are connected together by an appropriate electrical circuit.

The connectors of arms 112, 114 and 116 at connection points 120 and 122 (located at either end of arm 116) each comprise an electrical connection 504. These electrical connections 504 electrically connect arm 116 to arms 112 and 114. The connectors 200, on either end of arrow 124, and the connectors 300, at the back of arms 112 and 114, comprise electrical connections 502. Thus, arms 112 and 114 are electrically connected together by either end of arrow 124 at electrical connections 502. Therefore, the electrical circuit for assembly 100 cannot be completed unless arrow 124 is connected to arms 112 and 114. Lights 500 are powered by a battery (not shown) located in arrow 124. This arrangement ensures that motorists cannot unwittingly leave power flowing to lights 500 once they have folded warning triangle assembly 100 ready for transportation.

Lights 500 in arms 112, 114 and 116 may be programmed to produce a constant illumination, highlighting the presence of the warning triangle to approaching motorists. Lights 500 in arrow 124 may be programmed to flash in a sequence running from the back of arrow 124 to the tip, highlighting to motorists the direction of travel they should take in order to avoid a hazard.

Further to lights 500, arms 112, 114 and 116, and arrow 124 also comprise reflectors. Therefore, in the event that the battery is flat or there is a circuit failure, warning triangle assembly 100 can still be used to warn motorists.

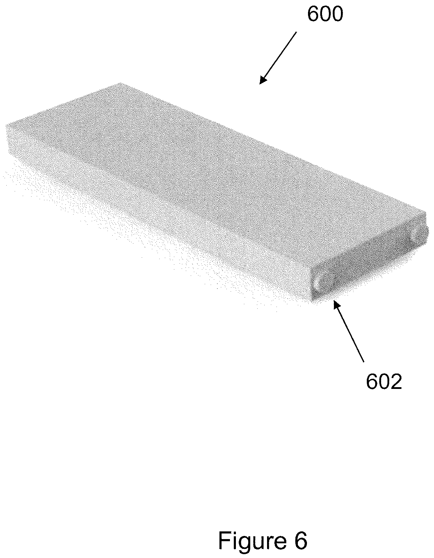

With reference now to figure 6, assembly 100 further comprises housing 600. Housing 600 comprises a rectangular container made of plastic having an interior region within which arms 112, 114 and 116, when in their folded arrangement, and arrow 124, can fit. Housing 600 allows assembly 100 to be compactly stored and easily transported.

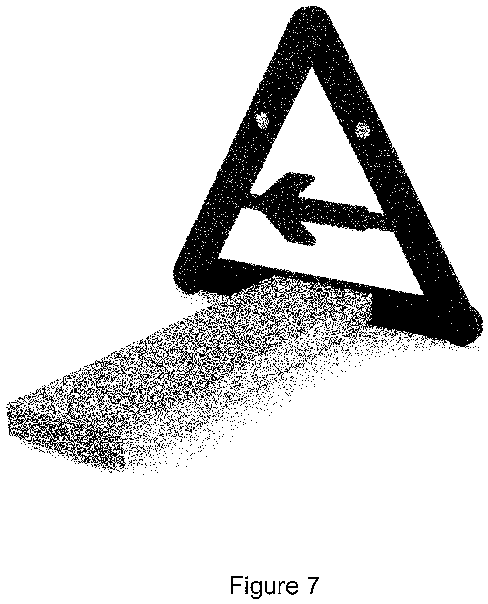

Further, housing 600 is connectable to arm 116 of assembly 100 by a support connector 602 in the form of fitting pegs, positioned at one end of housing 600, into a support connector 300 in the form of holes, positioned at the back of arm 116. This allows housing 600 to also act as a base for the warning triangle assembly 100, as shown in figure 7, and ensures that the warning triangle remains stable in all conditions when assembled. Housing 600 may also comprises a magnetic base that allows assembly 100 to be fastened to the roof of a vehicle to further enhance the visibility of the warning triangle for approaching motorists. The magnetic base also allows the assembly 100 to be fastened to any metallic surface.

Thus a warning triangle is provided that provides a device that is easy to store and transport, stable when fully assembled, highly visible in all lightings and weather conditions, and that provides motorists with a direction to travel in order to avoid an upcoming hazard.

Variations of features of the first example, which does not make part of the claimed invention, are possible, for example, arms 112, 114 and 116, direction indicator 124 and housing 600 are not limited to being made from plastic. Other suitable materials are envisaged such as metal.

The connectors of arms 112, 114 and 116 may be clips, magnets, hooks, push fit connectors, peg and hole combinations or other such appropriate connections may also be used. The same is true for arrow 124 and housing 600. These are not limited to connecting to arms 112, 114 and 116 by a peg and hole combination. Once again, variations include magnets or other such appropriate connectors.

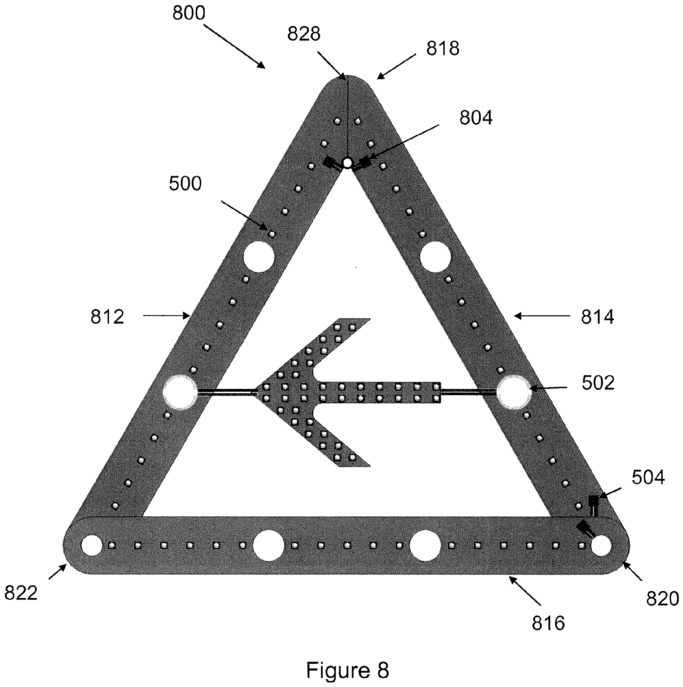

The arms of the warning triangle assembly may alternatively be arranged as shown in figure 8. Here, warning triangle assembly 800 comprises three arms 812, 814 and 816 that are connected together at connection points 818, 820 and 822. Arm 816 is substantially the same as arm 116 described above, differing in that it has an electrical connection 504 at only one end, located at connection point 820. Arms 812 and 814 connect to arm 816 at connection points 820 and 822 in the manner described previously (e.g. peg and hole combination, clip, hook etc.) The ends of arms 812 and 814 not connected to arm 816 are shaped such that each end comprises a flat edge 828. The two flat edges 828 are brought together at connection point 818 such that the two edges are parallel to one another. This completes the triangle of the warning triangle assemble 800. Arms 812 and 814 may be connected together at connection point 818 by a peg and hole combination, a clip, hook or any other appropriate connector mentioned above. In this alternative example, which does not make part of the claimed invention, arm 814 has electrical connections 504 at both of its ends and arm 812 has a single electrical connection 504 located at connection point 818. Thus, arm 812 and arm 814 are electrically connected together at connection point 818 by electrical connections 804, located at connection point 818. In this alternative arrangement, there are no electrical connections at connection point 822, therefore the connection of the direction indicator to the triangle is still required to complete the electrical circuit.

In this alternative configuration of the first example, which does not make part of the claimed invention, electrical connections 504 preferably electrically connect arm 814 to 816 permanently at connection point 820. Electrical connections 804 are arranged such that the physical connection or arm 812 and 814 along the flat edges 828 provides the electrical connection between arm 812 and arm 814. These two arms are connected together in such a way that they can be easily disconnected. Further, arms 812 and 814, when disconnected from each other, can be pivoted to allow them to lie alongside arm 816, in the same manner described previously. This allows the three arms to still be arranged in a folded position.

Alternatively, the electrical connections of the three arms can be arranged such that it is the connection of arms 812 and 814 at connection point 818 that completes the electrical circuit and not the direction indicator. For example, electrical connections 504 may be provided at both ends of arm 816, one electrical connection 504 provided at one end of arms 812 and 814, and one electrical connection 804 provided at the other end of arms 812 and 814.

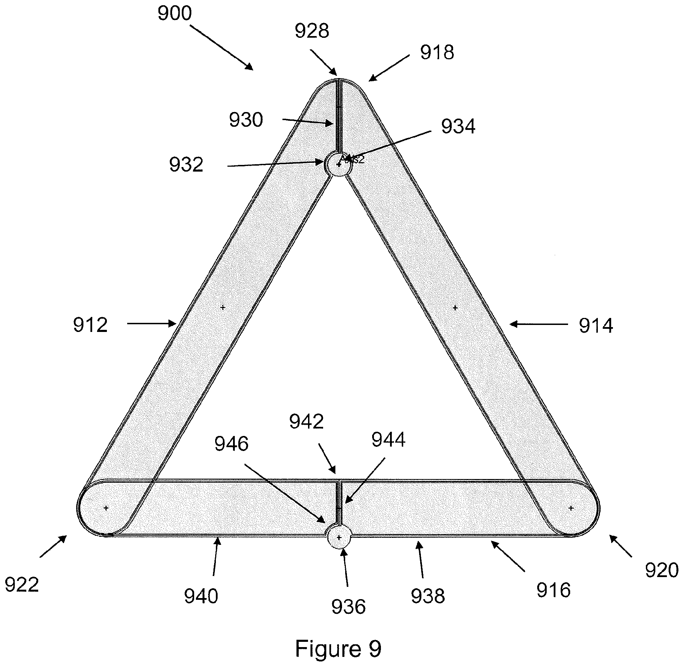

An embodiment of the present invention will now be described with reference to figure 9 (direction indicator not shown). Here, the warning triangle assembly 900 comprises three arms 912, 914 and 916 that are connected together at connection points 918, 920 and 922. Arm 916 is arranged to form the bottom side of the triangle when in use. The two arms 912 and 914 connect to the bottom arm 916 at connection points 920 and 922, located at either end of the bottom arm 916. This connection may be in the manner described previously (e.g. peg and hole combination, clip, hook etc.). Alternatively, the arms 912 and 914 may be connected to the bottom arm 916, such that they cannot be easily disconnected. Such a connection may be made with screw fit connectors, a nut and bolt combination or other suitable connectors.

The ends of the arms 912 and 914 that are not connected to the bottom arm 916 are shaped such that each end comprises a coupling edge 928 that has a flat edge section 930 and a curved edge section 932. The coupling edges 928 are located at connection point 918 at the top of the warning triangle assembly when in use. The curved edge section 932 of each coupling edge 928 is located at the end of the edge 928 that is closest to the bottom arm 916. The flat edge sections 930 of each arm oppose one another at connection point 918 such that the flat edge section of arm 912 is in contact with the flat edge section of arm 914 along the entirety of its length. The arms 912 and 914 are connected together by a top connector 934. The top connector 934 is located adjacent the curved edge section 932 of the arms 912 and 914. The curved edge sections are shaped to conform with the surface of the top connector 934 such that the top connector 934 is in contact with the entirety of curved edge section of both arms. The arms 912 and 914 are connected to the top connector 934 such that they can pivot about the top connector 934, which acts as a pivot point. This allows the flat edge sections 930 of each arm to be separated and brought together.

The bottom arm 916 comprises two arm portions 938 and 940. These arm portions are preferably of equal length but may alternatively be different lengths. One end of arm portion 938 is connected to arm 914 and one end of arm portion 940 is connected to arm 912. The other end of each arm portion has a coupling edge 942. Like with the coupling edges 928 that are positioned at the top of the warning triangle assembly when in use, the coupling edges 942 each have a flat edge section 944 and a curved edge section 946. The curved edge sections are located at the end of the coupling edges 942 that are farthest from top connector 934. The two flat edges sections may be brought together half way between connection points 922 and 920, such that the flat edge sections 944 are parallel and opposed to one another. The two arm portions are connected together by a bottom connector 936, located adjacent the curved edge section 946 of arm portions 938 and 940. The curved edge sections are shaped to conform with the surface of the bottom connector 936 such that the bottom connector 936 is in contact with the entirety of the curved edge section of both arm portions The bottom connector 936 may be substantially identical to connector 934. The arm portions 938 and 940 are connected to the bottom connector 936 such that they can pivot about the bottom connector 936, which acts as a pivot point. This allows the coupling edges 942 of each arm portion to move closer to top connector 934.

Connectors 934 and 936 allow the warning triangle assembly 900 to be folded into a compact arrangement without having to disconnect any of the arms. This folding procedure will now be described with reference to figures 9-12.

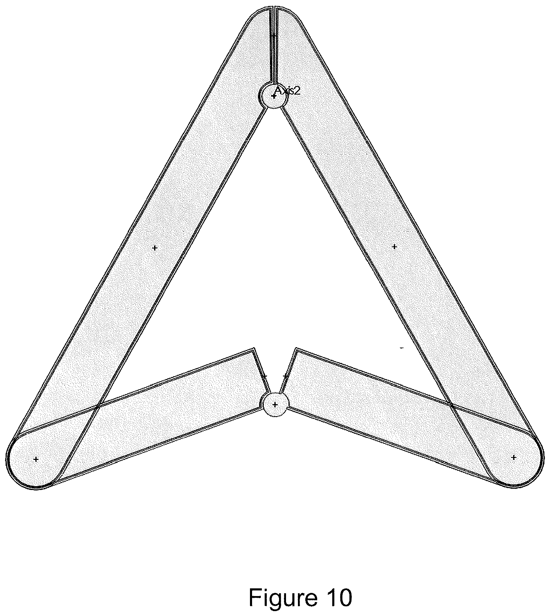

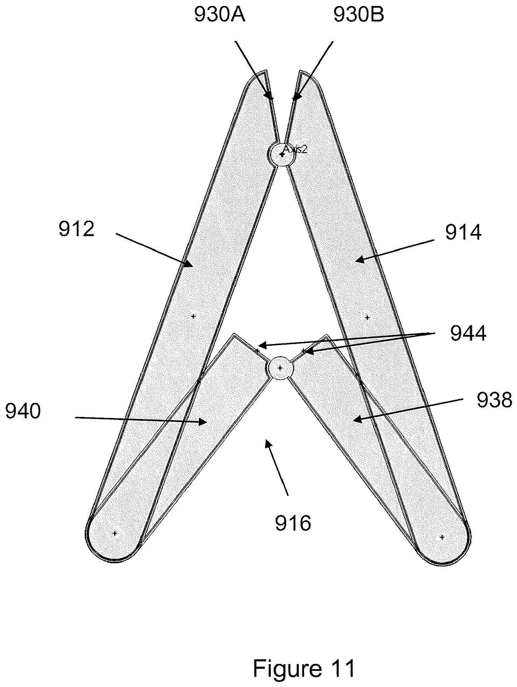

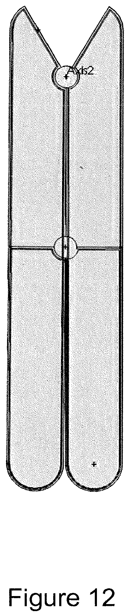

The bottom connector 936 and the connectors located at connection points 922 and 920 act as pivot points for the two arm portions 938 and 940. These pivot points allow the ends of the arm portions not connected to arms 912 and 914 to move toward top connector 934. As the arm portions continue to pivot, arms 912 and 914 are forced to pivot about top connector 934. This brings the two arms closer together and forces the coupling edge 928 of each arm to separate. Such an arrangement is shown in figures 10 and 11. Eventually, arms 912 and 914 are brought alongside each other, and arm 916 is folded such that ends of the arm portions that are connected to arms 912 and 914 are brought alongside one another. This is shown in figure 12.

The direction indicator (not shown) is connected to the three arms as already described in relation to the first example, which does not make part of the claimed invention. The electrical circuitry and connections can be implemented in the same way as described for the first example, which does not make part of the claimed invention. For example, an electrical connection can be provided between arm 912 and are 916 and between arm 914 and are 916 at connection points 922 and 920 respectively. The electrical circuit is then completed by connecting the direction indicator between arms 912 and 914, which electrically connects arm 912 to arm 914. This ensures that current can only flow around the assembly when the direction indicator is connected to the triangle.

According to the invention, electrical connections (not shown) that electrically connect arm 912 to arm 914 at connection point 918, are arranged on each of the flat edges 928. In this arrangement, the direction indicator is not required to complete the electrical circuit as arms 912 and 914 can electrically connect together at connection point 918. When the assembly is folded and the edges 928 are separated, the arms 912 and 914 are not electrically connected together and a current cannot flow. It is only when the triangle is fully formed and the edges 928 are brought together that the electrical circuit is complete and current can flow. This ensures that the lights of the warning triangle assembly cannot be accidently left on when the assembly is in its folded arrangement.

In such an arrangement, the electrical circuit of the warning triangle assembly may be completed by a simple contact connection. As the flat edges 928 are brought together, the electrical connection of arm 912 makes contact with the electrical connection of arm 914 and current can flow between the two arms. It will be appreciated that this principle may be applied to the first example, which does not make part of the claimed invention, as well. In such a case, the warning triangle may have connectors comprising electrical connections at all three connection points between the arm (e.g. the connectors at connection point 118 has electrical connections as well as the connectors at connection points 122 and 120). As such, the direction indicator may not be required to complete the circuit.

With reference now to figure 11, the flat edge section of each coupling edge 928 may further comprise an edge connector to ensure a solid connection between the flat edge section of arm 914 and the flat edge section of arm 912. The flat edge section of the arm 912 may be described as a first flat edge section 930A and the flat edge section of the arm 914 may be described as a second flat edge section 930B. Accordingly, the edge connector of the first flat edge section 930A may be described as a first edge connector and the edge connector of the second flat edge section 930B may be described as a second edge connector. First and second edge connectors may each further comprise the electrical connection for their corresponding coupling edge. It will be appreciated that any connector described in relation to previous arrangements may be used (e.g. the first and second edge connector may form a peg and hole combination, hook arrangement etc.). For example, first and second edge connectors may be magnetic connectors. In such a case, each magnet connector is formed by magnetic material provided, together with the electrical connection, on the flat edge. The magnetic material on one of the edges provides an attractive force on the magnetic material on the other edge. Thus, the first and second magnetic connectors ensure solid contact between the electrical connections and thus a consistent connection between arms 912 and 914. The first and second magnetic connectors may together form an electrical switch which may be described as a magnetic connector switch. The switch is in an on position when the triangle is fully unfolded and in an off position when the triangle is folded. Such an arrangement ensures solid contact between the two coupling edges and is also robust, weather resistant and provides a waterproof electrical connection between the arms.

It will be appreciated that other forms of connectors and electrical switches may be used, for example the magnetic connector switch may be formed from a reed switch arrangement. Here, a first and a second connector may not be required. One of the arms, for example arm 914 may be fitted with a reed switch which is configured to be in an open state when there is not magnetic field present. This switched may be arranged adjacent to the coupling edge of arm 914. The coupling edge of the other arm 912 may then comprise a magnet arranged adjacent to the coupling edge of arm 912. Thus, when the two coupling edges are brought together, the magnet is brought close to the reed switch. In the presence of the magnetic field provided by the nearby magnet, the reed switch closes and the circuit is complete. In this arrangement, permanent electrical connections may be provided between the arms, thus alleviating any need to ensure a secure connection between the arms. However, the presence of the reed switch still ensures that current only flows when the triangle is fully unfolded. It will be appreciated that such a switch may be applied to the first example, which does not make part of the claimed invention, as well, and may alternatively, or in addition, be utilised between the connectors of the arms and the directions indicator, with the direction indicator comprising the magnet.

It will also be appreciated that electrical connections may alternatively, or in addition, be located on each of the flat edge sections 944 of the bottom arm 916. In other words, the flat edge section of each bottom arm portion 938, 940 may have an electrical connection. As was the case with the electrical connections between the arms 912 and 914, the two electrical connections between the two bottom arm portions are brought together as the triangle is unfolded. Thus, it is only when the triangle is fully unfolded and the flat edge sections 944 are brought together that the circuit is complete and current can flow. Like the previous arrangement, an arrangement which has connections between the flat edge sections 944 of the bottom arm 916 does not require the direction indicator to complete the circuit.

Further, it will be appreciated that connectors or switches such as those described in relation to the coupling edges 928 may alternatively, or in addition, be located on each of the flat edge sections 944 of the bottom arm 916. For example, a reed switch and a magnet may be used for the coupling edges 942 of the bottom arm as described in relation to the arms 912 and 914. In this arrangement, one bottom arm portion may comprise the magnet and the other bottom arm portion may comprise the reed switch, with both being arranged adjacent their respective coupling edge 942.

Alternatively, the flat edge section of bottom arm portion 940 may have a first edge connector and the flat edge section of bottom arm portion 938 may have a second edge connector. The first and second edge connectors of the bottom arm may form any appropriate connection such as a magnetic connection, a peg and hole combination, etc.. Each connector may itself comprise the electrical connection for the coupling edge of each of the bottom arm portions. As was the case with the connectors between the arms 912 and 914, the two connectors, and hence the two electrical connections, between the two bottom arm portions are brought together as the triangle is unfolded. Further, for the case where magnetic connectors are used, the first and second magnetic connectors of the bottom arm 916 may form a magnetic connector switch in the same way as that formed by the first magnetic connector of arm 912 and the second magnetic connector of arm 914.

For the avoidance of doubt, the following alternatives apply to the described embodiment and to the described first example, which does not make part of the claimed invention.

The direction indicator itself is not limited to an arrow shape. A number of alternative shapes that are appropriate for indicating direction may be used. Alternatively, a square, rectangle, circle, or other appropriate shape of the indicator is possible having a surface providing indication by reflective indication or a plurality of lights arranged in the shape of an arrow or other appropriate shape, or arranged to illuminate in a pattern that indicates a direction.

Further, the direction indicator does not necessarily have to be connected to the triangle at both ends. It is possible for the direction indicator to be connected at one end to only one of the arms. In this case, the electrical circuit would be completed by the electrical connections at the connection point of the direction indicator and the one arm that it is connected to.

Although warning triangle assembly 100,900 has been described as being illuminated by lights 500, it should be appreciated that the warning triangle assembly may not have lights 500 or the electrical circuit, if, for example, it was not to be used at night or in poor lighting, or if only reflectors were to be used. Alternatively, only the arrow indicator, or only the three arms may have the lights. Further, the lights may not be powered by a battery as a connection to an external power source, for example, can be provided. If the lights are powered by a battery then it does not have to be positioned in the arrow indicator. It may be positioned in one of arms or housed externally. LED bulbs may not be used for the lights, as any means appropriate for illuminating the triangle and the direction indicator can be used.

Although the front surface 126 of arms 112, 114 and 116 have been described as being made from a substantially transparent material, the material may alternatively be substantially reflective if, for example, warning triangle assembly 100 does not have lights 500. Alternatively, the material may be transparent and reflective.

The programming of lights 500 described above should also not be considered limiting. The electrical circuit may comprise a control module to control the lights on the three arms such that they provide constant illumination or flash together, in sequence or at random. The lights on direction indicator may, independently to the arms, be programmed by the control module to provide constant illumination, flash in sequence, together or at random.

The functionality of the control module may be further extended as the lights may be programmed by the control module to switch on in a particular pattern. The pattern of illumination for the lights on the direction indicator may be different to the pattern of illumination for the lights on the arms, or the pattern may be the same. For example, particular lights on the direction indicator may be programmed to switch on in sequence such that the sequence indicates the direction the motorist should take, whilst the lights on the arms flash in unison.

A switch could be provided, to allow users to select and control the pattern of illumination of the lights. The switch may allow the user to select a first pattern of illumination for the lights of three arms and a second pattern for the lights of the direction indicator. For example, in a first mode the lights on the three arms may flash together, and the lights of the direction indicator may flash in a sequence that indicates direction and mode 2 provides constant illumination for the arms and the direction indicator.

In addition to the above patterns of illumination, the lights on the direction indicator could be programmed by the control module to form the shape of a symbol or a word (e.g. an exclamation mark or the word HELP). This can be integrated into the switch to allow the user to select the symbol or word that they wish to appear on their warning triangle.

There may also be a default sequence provided by the control module, to provide users with a useful pattern without having to select a mode. There may also be a degree of automation built into the programming such that, if the direction indicator is connected to the arms of the triangle in one orientation, one pattern of illumination is provided, and if the direction indicator is connected in another orientation, a different pattern of illumination is provided.

This automation may be extended further to allow the connection of the direction indicator to the arms of the triangle to change the pattern of illumination. For example, when the direction indicator is not connected to the arms, the lights in the triangle may flash altogether. Then, when the direction indicator is connected to the arms, the lights of the direction indicator turn on and flash such that they indicate a direction, and the lights in the triangle change their pattern of illumination.

Such flexibility and control over the lights (e.g. the control module and the switch) may be provided by standard circuitry that is well known in the art and accordingly will not be discussed further.

The control module may comprise a semiconductor chip or other appropriate circuitry. The control module may be imbedded in the direction indicator or in the arms.

The switch may be located on the direction indicator or the arms of the assembly. Alternatively a separate handset may be provided to allow the user to select a mode from a distance.

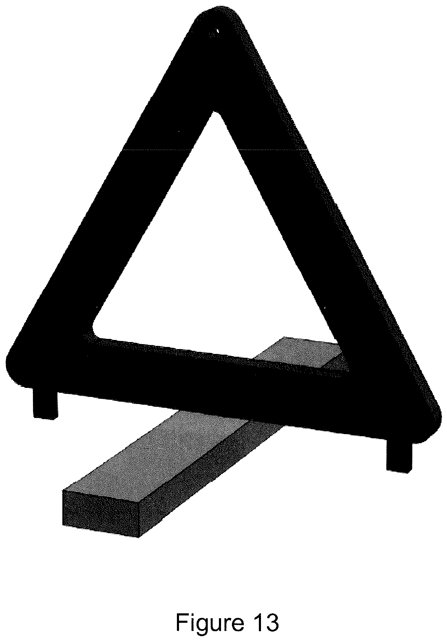

Housing 600 is not limited to connecting to arm 116 at one end. The top surface of the housing may connect to the bottom edge of the arm at the base of the triangle at a connection point that is positioned towards the centre of the housing. This connection may be provided by a peg and hole combination or other appropriate means. Such an alternative housing arrangement is shown in figure 13 (this figure is provided simply to illustrate the alternative housing arrangement; the warning triangle shown does not represent a possible embodiment of warning triangle assembly 900). The housing may be made with a magnetic base or a sucker or a plurality of suckers attached to the base, or made with neither.

Although it as been described in relation to a direction indicator arranged in a horizontal manner between the two arms that are connected to the bottom arm, it will be appreciated that the direction indicator may not be horizontal and may not be connected between these two arms.

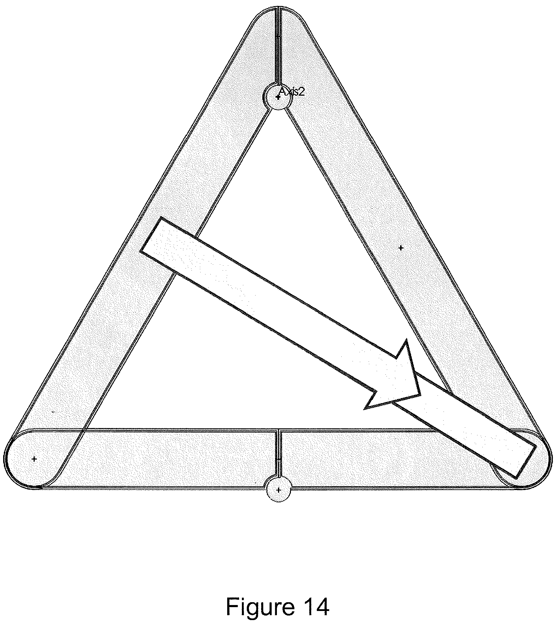

Figure 14 shows and example arrangement in which the direction indicator is arranged such that one end of the direction indicator is connected to an arm half way along the length of that arm and the other end is connected to one corner of the warning triangle at a connection point between two of the arms. As such, the direction indicator is arranged diagonally pointing towards one corner of the triangle. Alternatively, the arrow may be positioned such that it points diagonally towards another of the triangle's corners, or such that it points vertically upwards or downwards.

It will further be appreciated that the warning triangle assembly may not have a direction indicator arranged within the triangle at all. In such a case, the arms of the triangle may still have all the electronic capabilities described above. Direction may, therefore be indicated by other means, such as by illuminating the lights of the warning triangle's arms in such a way that the lights indicate direction. For example, this may be achieved by a sequence of lights running along one of the triangle's arm in a particular direction.

## Claims

1. A foldable warning triangle assembly (900) comprising:
three arms (912, 914, 916) configurable as a triangle, wherein each arm has an arm connector (918, 920, 922) connectable to a corresponding arm connector of one of the arms, and wherein one of the three arms comprises two arm portions (938, 940) pivotably connected together about a first arm connector (936) and the other two arms pivotably connected about a second arm connector (934), wherein the first and second arm connectors are pivot points arranged to allow the three arms to pivot such that the warning triangle assembly can be folded into a substantially collapsed arrangement and unfolded to form a triangle without disconnecting the three arms;
one of the three arms of the warning triangle assembly comprising a first coupling edge section (928) arranged adjacent one of the pivot points, wherein the first coupling edge section is arranged such that the separation between the first coupling edge section and an adjacent second coupling edge section (928) of one of the three arms is a minimum when the warning triangle assembly is fully unfolded; **characterized by**
an electrical connection arranged adjacent to the first coupling edge section (328) and wherein the pivoting of the arms to configure the arms as a triangle completes an electrical circuit.

2. An assembly according to claim 1, wherein one of the arm portions comprises the first coupling edge section and the other arm portion comprises the second coupling edge section and are arranged such that the first and second coupling edge sections are adjacent the first arm connector.

3. An assembly according to claim 1, wherein the first and second coupling edge sections are arranged adjacent to the second arm connector.

4. An assembly according to claim 2, wherein the arms of the warning triangle further comprise a first and second coupling edge section arranged adjacent the second arm connector.

5. A foldable warning triangle assembly according to claims 1 to 4, wherein the first and second coupling edge sections are configured to form an electrical switch, wherein the switch is configured to close when the warning triangle is fully unfolded thereby completing the electrical circuit between the arms.

6. A foldable warning triangle assembly according to claim 5, wherein the electrical switch comprises a magnet arranged adjacent to the first coupling edge and a reed switch arranged adjacent the second coupling edge.

7. An assembly according to any preceding claim , wherein the arms comprise a plurality of lights (500).

8. An assembly according to claim 7, wherein the plurality of lights are electrically connected together by the electrical circuit.

9. An assembly according to claim 7 or 8, wherein the electrical circuit has a control module arranged to control the illumination of the plurality of lights to provide a pattern of illumination.

10. An assembly according to claim 9, wherein the assembly further comprises a switch to allow a user to choose the pattern of illumination of the lights.

11. An assembly according to claim 9 or 10, wherein the pattern of illumination comprises constant illumination.

12. An assembly according to claim 9 or 10, wherein the pattern of illumination comprises the plurality of lights illuminating in sequence.

13. An assembly according to claim 12, wherein the sequence of illumination indicates a direction.

14. An assembly according to any preceding claim, wherein the assembly further comprises a housing having an interior, and wherein the three arms, when folded, can fit within the housing (600).

15. An assembly according to claim 14, wherein the housing has a support connector (602) connectable to a support connector of the arm at the base of the triangle.

## Patentansprüche

1. Faltbare Warndreiecksanordnung (900), die Folgendes umfasst:
drei Arme (912, 914, 916), die zu einem Dreieck konfiguriert werden können, wobei jeder Arm einen Armverbinder (918, 920, 922) hat, der mit einem entsprechenden Armverbinder von einem der Arme verbunden werden kann, und wobei einer der drei Arme zwei Armabschnitte (938, 940) aufweist, die um einen ersten Armverbinder (936) schwenkbar verbunden sind, und die anderen beiden Arme um einen zweiten Armverbinder (934) herum schwenkbar verbunden sind, wobei der erste und der zweite Armverbinder Drehpunkte sind, so ausgelegt, dass sie ein Schwenken der drei Arme zulassen, so dass die Warndreiecksanordnung in eine im Wesentlichen zusammengefaltete Anordnung gefaltet und zum Bilden eines Dreiecks auseinandergefaltet werden kann, ohne die drei Arme zu trennen;
wobei einer der drei Arme der Warndreiecksanordnung eine erste Kupplungsrandsektion (928) umfasst, die neben einem der Drehpunkte angeordnet ist, wobei die erste Kupplungsrandsektion so angeordnet ist, dass die Trennung zwischen der ersten Kupplungsrandsektion und einer benachbarten zweiten Kupplungsrandsektion (928) von einem der drei Arme minimal ist, wenn die Warndreiecksanordnung völlig auseinandergefaltet ist; **gekennzeichnet durch**
eine elektrische Verbindung, die neben der ersten Kupplungsrandsektion (328) angeordnet ist,
und wobei das Schwenken der Arme zum Konfigurieren der Arme zu einem Dreieck einen Stromkreis schließt.

2. Anordnung nach Anspruch 1, wobei einer der Armabschnitte die erste Kupplungsrandsektion umfasst und der andere Armabschnitt die zweite Kupplungsrandsektion umfasst und sie so angeordnet sind, dass sich die erste und die zweite Kupplungsrandsektion neben dem ersten Armverbinder befinden.

3. Anordnung nach Anspruch 1, wobei die erste und die zweite Kupplungsrandsektion neben dem zweiten Armverbinder angeordnet sind.

4. Anordnung nach Anspruch 2, wobei die Arme des Warndreiecks ferner eine erste und eine zweite Kupplungsrandsektion umfassen, die neben dem zweiten Armverbinder angeordnet sind.

5. Faltbare Warndreiecksanordnung nach den Ansprüchen 1 bis 4, wobei die erste und zweite Kupplungsrandsektion zum Bilden eines elektrischen Schalters konfiguriert sind, wobei der Schalter so konfiguriert ist, dass er schließt, wenn das Warndreieck vollständig auseinandergefaltet ist, um dadurch den Stromkreis zwischen den Armen zu schließen.

6. Faltbare Warndreiecksanordnung nach Anspruch 5, wobei der elektrische Schalter einen neben dem ersten Kupplungsrand angeordneten Magnet und einen neben dem zweiten Kupplungsrand angeordneten Reed-Schalter umfasst.

7. Anordnung nach einem vorherigen Anspruch, wobei die Arme mehrere Leuchten (500) umfassen.

8. Anordnung nach Anspruch 7, wobei die mehreren Leuchten durch den Stromkreis elektrisch miteinander verbunden sind.

9. Anordnung nach Anspruch 7 oder 8, wobei der Stromkreis ein Steuermodul hat, ausgelegt zum Steuern der Beleuchtung der mehreren Leuchten, um ein Beleuchtungsmuster zu erzeugen.

10. Anordnung nach Anspruch 9, wobei die Anordnung ferner einen Schalter umfasst, so dass ein Benutzer das Beleuchtungsmuster der Leuchten wählen kann.

11. Anordnung nach Anspruch 9 oder 10, wobei das Beleuchtungsmuster konstante Beleuchtung umfasst.

12. Anordnung nach Anspruch 9 oder 10, wobei das Beleuchtungsmuster mehrere Leuchten umfasst, die in Folge leuchten.

13. Anordnung nach Anspruch 12, wobei die Beleuchtungsfolge eine Richtung anzeigt.

14. Anordnung nach einem vorherigen Anspruch, wobei die Anordnung ferner ein Gehäuse mit einem Inneren umfasst und wobei die drei Arme, wenn sie zusammengefaltet sind, in das Gehäuse (600) passen.

15. Anordnung nach Anspruch 14, wobei das Gehäuse einen Stützverbinder (602) hat, der mit einem Stützverbinder des Arms an der Basis des Dreiecks verbunden werden kann.

## Revendications

1. Ensemble de triangle de signalisation pliable (900) comprenant :
trois bras (912, 914, 916) configurables en forme de triangle, dans lequel chaque bras comporte un connecteur de bras (918, 920, 922) pouvant être connecté à un connecteur de bras correspondant d'un des bras, et dans lequel un des trois bras comprend deux parties de bras (938, 940) connectées de manière pivotante ensemble autour d'un premier connecteur de bras (936) et les deux autres bras connectés de manière pivotante autour d'un second connecteur de bras (934), dans lequel les premier et second connecteurs de bras sont des points pivots disposés pour permettre aux trois bras de pivoter de telle sorte que l'ensemble de triangle de signalisation puisse être plié dans une configuration sensiblement compacte et déplié pour former un triangle sans déconnecter les trois bras ;
un des trois bras de l'ensemble de triangle de signalisation comprenant une première section de bord de raccordement (928) disposée adjacente à un des points pivots, dans lequel la première section de bord de raccordement est disposée de telle sorte que la séparation entre la première section de bord de raccordement et une seconde section de bord de raccordement (928) adjacente d'un des trois bras soit un minimum quand l'ensemble de triangle de signalisation est entièrement déplié ; **caractérisé par** :
une connexion électrique disposée adjacente à la première section de bord de raccordement (328)
et dans lequel le pivotement des bras pour configurer les bras en forme de triangle ferme un circuit électrique.

2. Ensemble selon la revendication 1, dans lequel une des parties de bras comprend la première section de bord de raccordement et l'autre partie de bras comprend la seconde section de bord de raccordement et sont disposées de telle sorte que les première et seconde sections de bord de raccordement soient adjacentes au premier connecteur de bras.

3. Ensemble selon la revendication 1, dans lequel les première et seconde sections de bord de raccordement sont disposées adjacentes au second connecteur de bras.

4. Ensemble selon la revendication 2, dans lequel les bras du triangle de signalisation comprennent en outre des première et seconde sections de bord de raccordement disposées adjacentes au second connecteur de bras.

5. Ensemble de triangle de signalisation pliable selon les revendications 1 à 4, dans lequel les première et seconde sections de bord de raccordement sont configurées pour former un interrupteur, dans lequel l'interrupteur est configuré pour se fermer quand le triangle de signalisation est entièrement déplié fermant ainsi le circuit électrique entre les bras.

6. Ensemble de triangle de signalisation pliable selon la revendication 5, dans lequel l'interrupteur électrique comprend un élément disposé adjacent au premier bord de raccordement et un interrupteur Reed disposé adjacent au second bord de raccordement.

7. Ensemble selon n'importe quelle revendication précédente, dans lequel les bras comprennent une pluralité de lumières (500).

8. Ensemble selon la revendication 7, dans lequel les lumières de la pluralité de lumière sont connectées ensemble par le circuit électrique.

9. Ensemble selon la revendication 7 ou 8, dans lequel le circuit électrique présente un module de commande disposé pour commander l'éclairage de la pluralité de lumière afin de fournir une configuration d'éclairage.

10. Ensemble selon la revendication 9, l'ensemble comprenant en outre un interrupteur pour permettre à un utilisateur de choisir la configuration d'éclairage des lumières.

11. Ensemble selon la revendication 9 ou 10, dans lequel la configuration d'éclairage comprend un éclairage constant.

12. Ensemble selon la revendication 9 ou 10, dans lequel la configuration d'éclairage comprend l'éclairage séquentiel de la pluralité de lumières.

13. Ensemble selon la revendication 12, dans lequel la séquence d'éclairage indique un sens.

14. Ensemble selon n'importe quelle revendication précédente, l'ensemble comprenant en outre un boîtier présentant un intérieur, et dans lequel les trois bras, quand ils sont pliés, peuvent entrer dans le boîtier (600).

15. Ensemble selon la revendication 14, dans lequel le boîtier présente un connecteur de support (602) pouvant être connecté à un connecteur de support du bras à la base du triangle.
